# EUROPEAN PATENT APPLICATION

(11) **EP 0 936 046 A1**
(43) Date of publication of application: **18.08.1999**
(21) Application number: 99200400.2
(22) Date of filing: 11.02.1999
(51) Int. Cl.: B29C 45/16, F16L 47/06

(54) **Method and apparatus for manufacturing a gasket sealing for a plastic fitting or fitting ring**

(30) Priority: 11.02.1998 NL 1008269; 21.04.1998 NL 1008949
(71) Applicant: INTER TOOLING SERVICES B.V., 7825 VG Emmen (NL)
(72) Inventor: van Manen, Dirk, 7751 GM Dalen (NL); Albers, Hendrikus Johannes Theodorus, 7751 GK Dalen (NL)
(74) Representative: Ottevangers, Sietse Ulbe

(57) **Abstract**

Method and apparatus for manufacturing a gasket sealing for a plastic fitting or fitting ring, the fitting or fitting ring being formed by injection molding in a mold cavity with a mold arranged so that the fitting or fitting ring is provided with an internal chamber, the mold having a core with at least a first position for forming the fitting (ring) proper and a second position for forming a gasket mold cavity for a sealing gasket within said chamber, said gasket mold cavity, after the withdrawal of the needles, being filled with a suitable material for a sealing gasket, the mold further comprising means for providing the fitting (ring) and the gasket mold cavity with such a shape that the sealing gasket is conformably secured against displacement along the fitting (ring).

## Description

The invention relates to a method and apparatus for manufacturing a gasket sealing for a plastic fitting or fitting ring.

For discharge pipes of plastic such as polypropene and PVC, fittings such as coupling sleeves, T-pieces, Y-pieces etc. are used for interconnecting the pipelines. For this, use can be made of an adhesive to obtain a mechanically firm and also properly sealed joint. Often, however, use is made of fittings in which a gasket of natural rubber is mounted which provides the desired sealing.

These rubber gaskets may be mounted in an internal groove of a fitting, which is rather inconvenient and labor-intensive. Also, the gaskets are often mounted in a loose fitting ring, usually designed as snap ring, which is subsequently clampingly snapped onto a fitting.

A drawback of this method is that many separate parts should be joined together and held in store. Moreover, because of the shape and nature of the rubber gaskets, they are difficult to process in an automated manner. The equipment required therefor is costly and susceptible to trouble.

The object of the invention is to overcome the drawbacks outlined and generally to provide an efficient, reliable and relatively inexpensive method for manufacturing a gasket sealing for a plastic fitting. To this end, in accordance with the invention, a method of the above-described type is characterized in that the fitting or fitting ring is formed by injection molding in a mold cavity with a mold arranged so that the fitting or fitting ring is provided with an internal chamber, the mold having a core with at least a first position for forming the fitting (ring) proper and a second position for forming a sealing gasket, the fitting ring being formed while the core is in its first position and the condition being subsequently brought into a second position for at least partially forming a gasket mold cavity for a sealing gasket within said chamber, said gasket mold cavity being filled with a suitable material for a sealing gasket, the mold further comprising means for providing the fitting (ring) and the gasket mold cavity with such a shape that the gasket formed in the gasket mold cavity conformably connects to the fitting (ring) and is secured against displacement along the fitting (ring).

In accordance with the invention, an apparatus for applying the method is characterized in that the fitting or fitting ring is formed by injection molding in a mold cavity with a mold arranged so that the fitting or fitting ring is provided with an internal chamber, the mold having a core with at Least a first position for forming the fitting (ring) proper and a second position for forming a sealing gasket in a gasket mold cavity located at least partially within said chamber, which gasket mold cavity can be filled with a suitable material for a sealing gasket, the mold further comprising means for providing the fitting (ring) and the gasket mold cavity with such a shape that the sealing gasket conformably connects to the fitting and is secured against displacement along the fitting ring.

Hereinafter, the invention will be further described with reference to the accompanying drawing.
Fig. 1 schematically shows, in section, a part of a plastic fitting comprising a snap ring and a sealing gasket according to the known technique;
Fig. 2 schematically shows, in section, a part of an example of a snap ring with sealing gasket according to the invention;
Figs. 3-5 schematically illustrate an example of a method and apparatus according to the invention for manufacturing a snap ring with sealing gasket according to the invention;
Fig. 6 schematically shows, to a larger scale, a part of Fig. 5;
Fig. 7 schematically shows, in longitudinal section, an example of a part of a fitting with sealing section according to the invention;
Fig. 8 schematically shows, in longitudinal section, an example of a part of a fitting with sealing section according to the invention;
Fig. 9 schematically shows, in section, a part of a second example of a fitting with sealing gasket according to the invention; and
Figs. 10-12 schematically show an apparatus for manufacturing a fitting with sealing gasket according to Fig. 9.

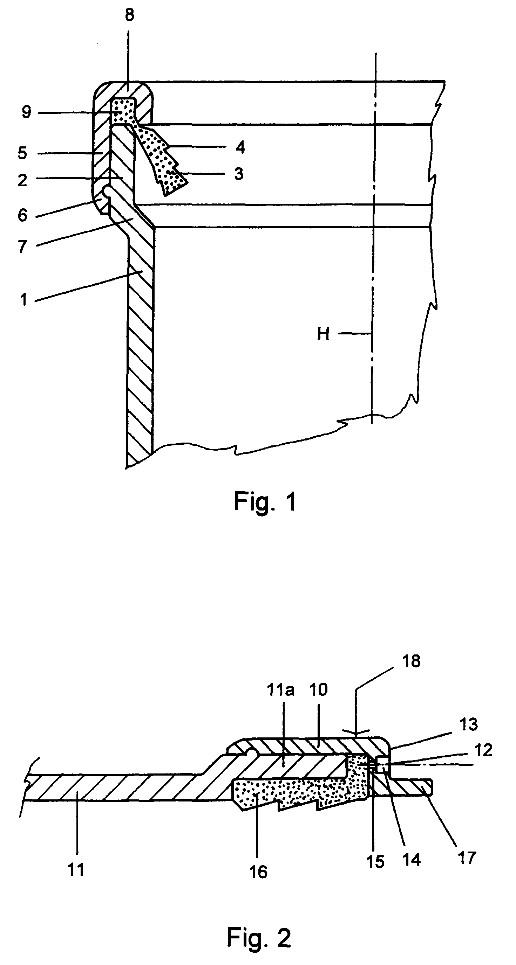

Fig. 1 schematically shows, in section, a part of a plastic fitting 1 having a center line H and a portion 2 of enlarged diameter which forms a chamber into which a flexible, natural-rubber sealing gasket 3 extends, which gasket, in this example, has its inside surface provided with circular ribs 4. The sealing gasket is mounted by means of a snap ring 5, which is slightly resilient and can thus be pressed on the outside around the portion 2 of enlarged diameter. Accordingly, a slightly narrowed edge 6 catches behind an external shoulder 7 at the end of the portion 2 of enlarged diameter. At its end face, the snap ring has an edge 8 bent inwards and backwards so as to be U-shaped, which edge forms an internal chamber in which an annular mounting flange 9 of the gasket 3 is retained.

Hence, in this known construction, in addition to the fitting itself, each coupling part of the fitting further requires a rubber gasket and a snap ring, which should be stored separately and mounted separately. Therefore, one T-piece requires three snap rings, three gaskets and three assembling operations.

Fig. 2 schematically shows an example of a snap ring 10 according to the invention, mounted on a coupling part 11 with widened portion 11a of a fitting. The snap ring 10 has largely the same form as the snap ring 5 of Fig. 1, but is now provided with a number of openings 12 in the inwardly bent edge 13, which corresponds to the edge 8 of Fig. 1. On the side facing away from the coupling part 11, the openings 12 have a larger diameter than on the side facing the coupling part 11. The larger-diameter part is denoted by 14 and the smaller-diameter part, connecting thereto to form a round shoulder, is denoted by 15. In a manner to be described in more detail hereinbelow, the gasket 16, which may otherwise have the same shape as the gasket 3 of Fig. 1, is formed with projections extending into the openings 12, by injection molding via the openings 12. The gasket is made from an appropriate material, for instance from elastomeric material or from soft PVC. In this example, the inwardly bent edge 13 does not blend with a rearwardly bent edge as in Fig. 1, but connects to a flange 17 which extends away from the coupling part and which has substantially the same diameter as the coupling part 11.

The number of openings 12 is sufficient for guaranteeing a reliable attachment between the gasket and the snap ring. On the other hand, the gasket can readily be pulled loose from the snap ring, to enable separate recycling.

In the example shown, the openings 12 are located in the end face of the snap ring, yet the openings may also be located in the cylindrical part of the snap ring, as indicated, by way of example, by an arrow 18 in Fig. 2.

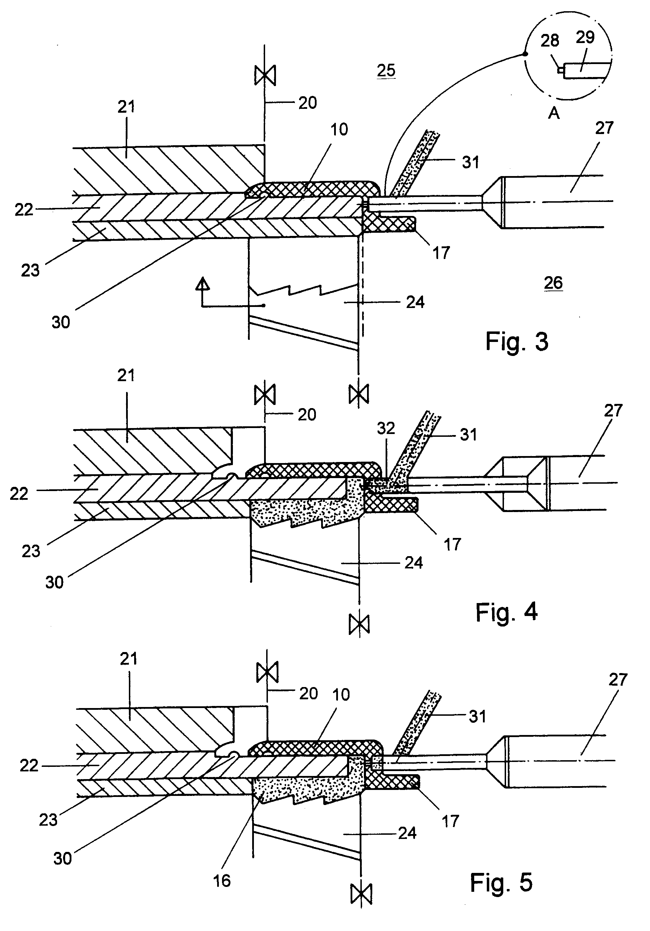

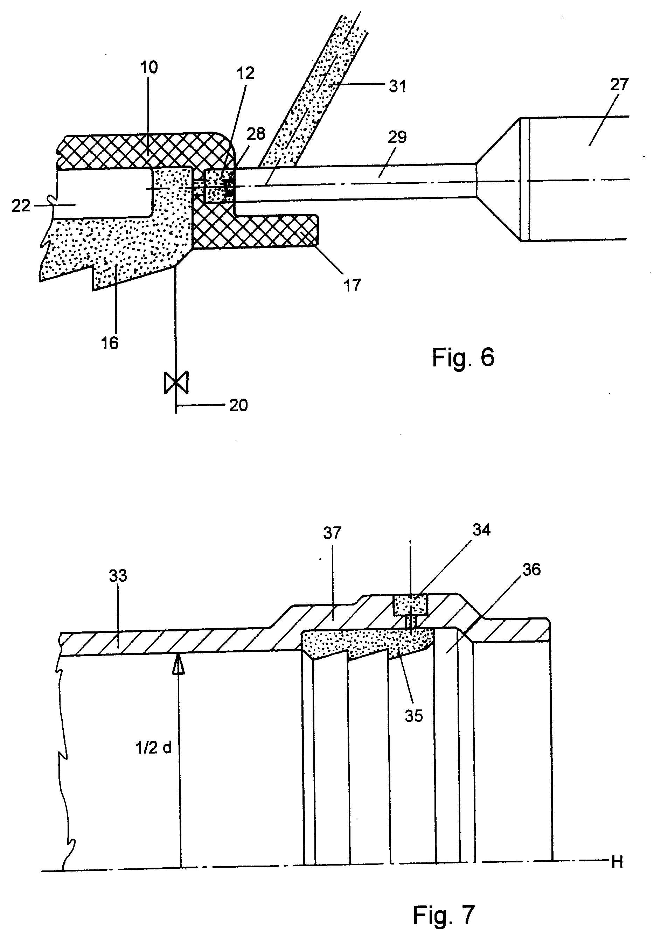

Figs. 3-6 schematically illustrate a method for manufacturing a snap ring with integrally injection-molded sealing gasket. Fig. 3 shows the situation where a snap ring 10 has just been manufactured by injection molding in a corresponding mold cavity. The mold is closed and has a separating face 20 having (in the Figures) the ejection side on the left thereof and the injection side on the right thereof. On the ejection side, the mold cavity is bounded by an outer slidable sleeve 21 and two slidable sleeves 22 and 23 lying within the sleeve 21 and within one another. Located within the sleeve 23 are pivotable segments 24 known per se for forming internal chambers in coupling parts and the like. Such pivotable segments are for instance described in German Gebrauchsmuster G 9414523.7. On the injection side, the mold has an outer part 25 and a central part 26. The injection mold cavity formed by the mold parts in the closed position of the mold, which injection mold cavity has the shape of a snap ring, is first filled with thermoplastic material. This technique is also referred to as "condition-injection". This involves a number of circumferentially arranged needles 27 extending into the injection mold cavity. The tips of the needles have a front section 28 of a relatively small diameter and a following section 29 of a larger diameter, as can be seen in detail A in Fig. 3 and also in Fig. 6. In the following phase, shown in Fig. 4, the sleeve 21 is withdrawn to create space, allowing the snap ring to pass the thickening 30 with temporary elastic deformation if the sleeve 22 is subsequently slightly withdrawn. Sleeve 23 is withdrawn as well, after which the segments 24 are swiveled outwards. The outward swivel movement of the segments is bounded by the sleeve 23. There is thus created a cavity bounded by the segments, the sleeve 22 and the snap ring itself, which cavity, after the withdrawal of one or more needles and via the bore 32 or opening 12 in the snap ring released by the withdrawn needles, can be filled from a supply channel 31 for suitable, liquefied injection-molding material for the gasket. During the filling of the cavity for the gasket, the other needles have been withdrawn as well, yet only over a small distance, so that the end face of the needle part 29 just closes off the associated opening 12 in the snap ring. This needle position is clearly visible in Fig. 6. Hence, two types of needles are in fact involved, which may have the same shape but which have different functions. The first type of needle is the sprue needle, which has three positions, viz. the position of Fig. 3, the position of Fig. 4 and the position of Figs. 5 and 6. The second type of needle is the break-through needle, which provides the openings in the snap ring and has two positions, viz. the position of Fig. 3 and the position of Figs. 5 and 6.

After the gasket cavity has been filled, the sprue needle(s) move(s) forwards again into the position shown in Figs. 5 and 6, whereby the material supply via the channels 31 and 32 is closed off and the corresponding opening(s) in the snap ring is (are) also sealed.

Finally, the mold is opened, the segments 24 are swiveled inwards and the snap ring with the integrally injection-molded gasket is slid from sleeve 22 by sleeve 21 and ejected.

Fig. 7 schematically shows, in longitudinal section, a part of a fitting 33 with a gasket 35 that is integrally injection-molded via the injection openings 34 by means of the so-called co-injection technique. The fitting has a center line H and a diameter d and, adjacent the open end of a coupling part, a chamber 36 in a fitting part 37 of enlarged diameter, in which an integrally injection-molded sealing gasket 35 lies. In this example, the gasket has again a suitable profile on the inside thereof. In this example, the injection openings have a radial orientation. The number of openings is large enough to establish a reliable connection between gasket and fitting, and small enough not to weaken the fitting too much and to readily enable separation of the gasket from the fitting, in view of recycling.

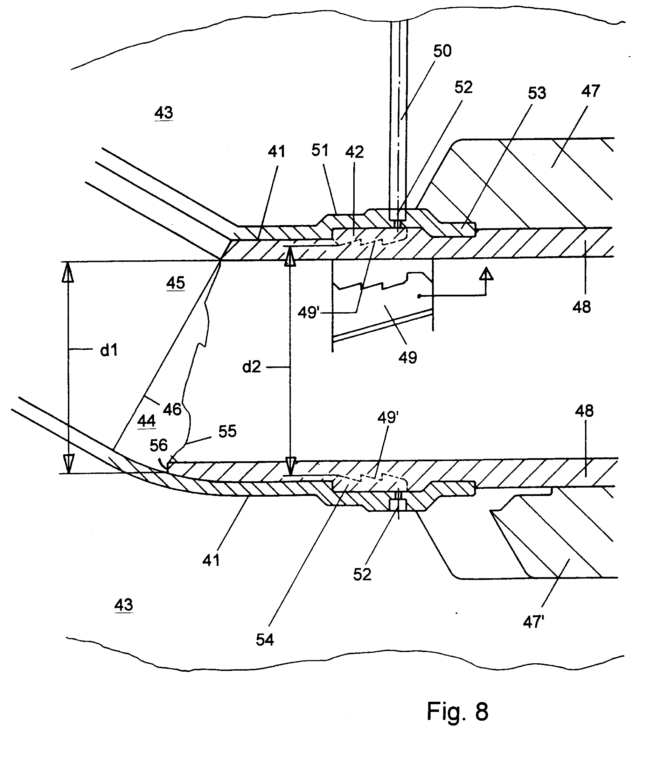

Fig. 8 schematically shows, in longitudinal section, an example of a mold 40 for manufacturing a curved fitting 41 with an integrally injection-molded sealing gasket, which is not visible in Fig. 8, yet whose position is indicated at 42. The mold has a mold block 43 and cores 44, 45, abutting against each other at separating face 46. The mold further comprises an inner sleeve 48 and an outer sleeve 47, lying around the core 44. Further, the core 44 again comprises swivelable segments 49, which, at the start of the injection molding process, are in the inwardly swiveled rest position. The mold cavity for the fitting 41 is formed by the mold block 43, the cores 44,45, the inner sleeve 48 and the outer sleeve 47. First, the mold cavity is filled with thermoplastic material in the usual manner. In Fig. 8, this involves the needles 50, that are similar to the sprue and break-through needles 27 of Figs. 3-6, extending into the mold cavity at the location of the fitting part 51 with enlarged diameter, to create, at the location of the needles, openings 52 having staggered diameters. Next, the outer sleeve 47 is withdrawn, as indicated at 47'. After the sleeve 47 has been withdrawn over a small distance of, for instance, 15 mm, it takes along the inner sleeve 48, which is pulled from the fitting completely. Accordingly, the lip 53 of the fitting moves temporarily elastically outwards, yet resumes its original shape after the part 54 with enlarged outside diameter of the sleeve 48 has passed the lip.

After the sleeve 48 has been pulled away, the segments 49 are swiveled outwards into the position indicated by broken lines 49'. Thus, the segments form a gasket space on the inside of the fitting part 51 of enlarged diameter. Subsequently, after one or more sprue needles 50 have released a supply channel for gasket material in a similar manner as described earlier in respect of the snap ring, and the break-through needles have been slightly withdrawn so that the openings 52 remain closed towards the outside yet can be filled with gasket material, the space thus formed is filled.

Next, the core is removed and the fitting provided with one or more sealing gaskets can be ejected. To enable removal of the core 44, it should have a dimension d1 smaller than the internal gasket diameter d2. In the case of a curved fitting as shown in Fig. 8, this would lead to a razor-sharp front edge portion of the inner sleeve 48. To avoid this, the front edge of the sleeve 48 has a profile abutting against a correspondingly profiled edge of the core 44. The front edge of the sleeve 48 may now be blunt as indicated at 56.

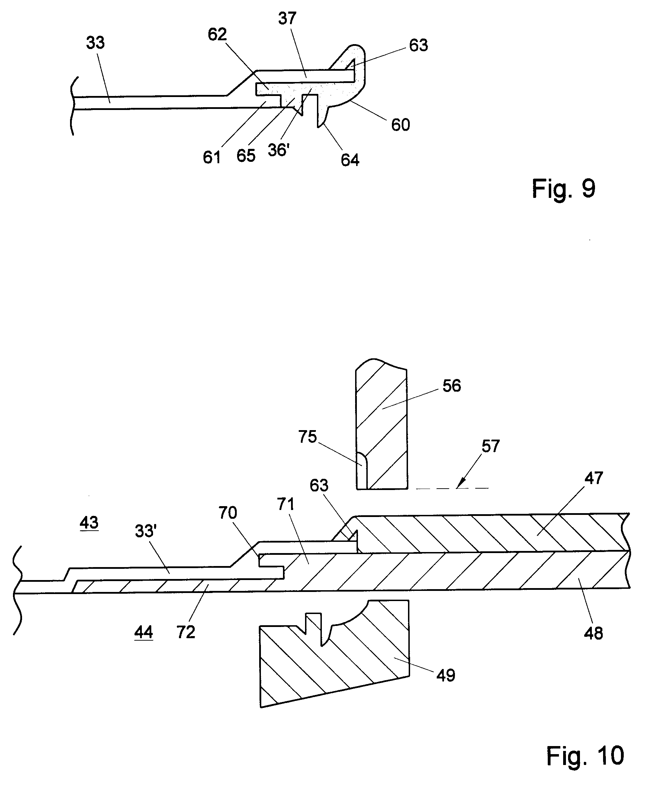

Fig. 9 schematically shows, in section, a part of another example of a fitting with an integrally injection-molded sealing gasket according to the invention. The fitting 33 has again a widened portion 37 forming an internal chamber 36', in which a sealing gasket 60 is formed. Projecting into the chamber is a flange 61 that extends in line with the fitting part 33. Located between the flange 61 and a part of the widened portion 37 connecting to the fitting part 33 is an annular space which may or may not be locally interrupted, in which a corresponding flange 62 of the sealing gasket is retained. Unlike the chamber 36 of Fig. 7, the internal chamber 36' in this example is open at the open end of the fitting 33, in that the widened portion 37 also forms the end of the fitting. The widened portion is further provided with means for retaining the sealing gasket in a form-closed manner. In the example shown, these means have the form of a circular rim 63 extending at or adjacent the edge of the fitting, which rim may or may not be locally interrupted or provided with a number of projections and/or built up from a series of projections. If so desired, the edge and/or the projections may be provided with cavities and/or bores or the like, to strengthen the connection with the gasket. In the example shown, the rim, viewed in section, extends approximately radially on the outside of the widened portion 37 and connects directly to the end edge of the fitting. It is possible to use more than one rim and/or to use a rim provided in a different place, for instance on the inner side of the fitting, and/or to use one or more differently shaped rims. In the example shown, the gasket 60 extends around the end edge of the fitting and around the rim 63 located on the outside of the fitting, to a position adjacent the outer wall of the fitting. In this manner, the gasket is prevented from being displaced in the fitting or from rolling up when a pipe end is inserted into the fitting. Also, the gasket protects the end edge of the fitting.

Further, the gasket shown has an inwardly extending flap 64, capable of bending backwards to abut firmly and properly sealingly against the surface of a pipe end inserted into the fitting. In this example, the flap is beveled at the front side, to obtain a locating edge for a pipe end.

In this example, the gasket further has an edge 65 located directly before the end face of the flange, and a recess between the edge 65 and the flap 64.

further provided with means for retaining the sealing gasket in a form-closed manner. In the example shown, these means have the form of a circular rim 63 extending at or adjacent the edge of the fitting, which rim may or may not be locally interrupted. In the example shown, the rim is located on the outside of the widened portion 37 and connects directly to the end edge of the fitting. It is possible to use more than one rim and/or to use a rim provided in a different place, for instance on the inner side of the fitting. In the example shown, the gasket 60 extends around the end edge of the fitting and around the rim 63 to a position adjacent the outer wall of the fitting. In this manner, the gasket is prevented from being displaced in the fitting or from rolling up when a pipe end is inserted into the fitting. Also, the gasket protects the end edge of the fitting.

Further, the gasket shown has an inwardly extending flap 64, capable of bending backwards to abut firmly and properly sealingly against the surface of a pipe end inserted into the fitting. In this example, the flap is beveled at the front side, to obtain a locating edge for a pipe end.

In this example, the gasket further has an edge 65 located directly before the end face of the flange, and a recess between the edge 65 and the flap 64.

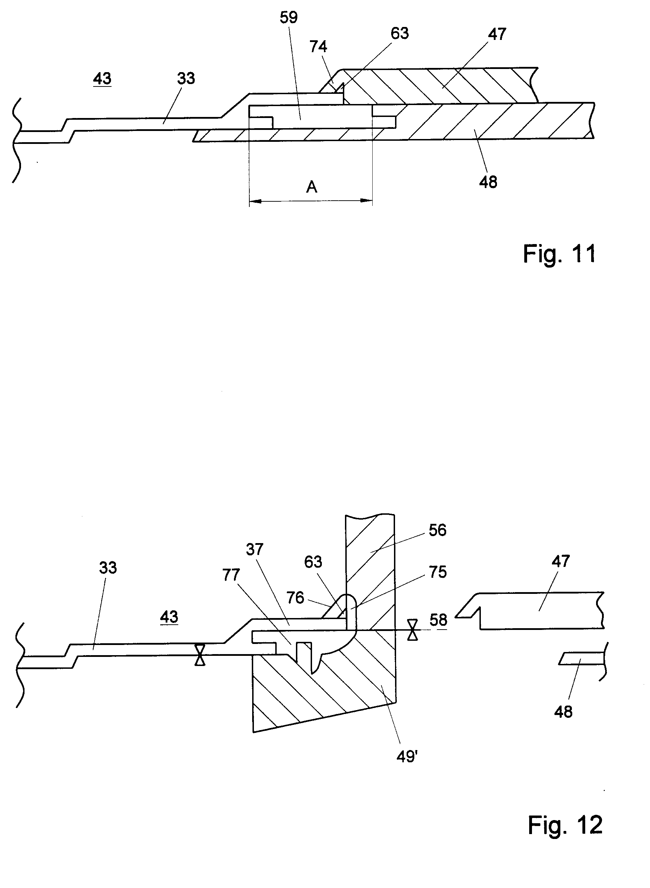

Figs. 10-12 schematically show a part of an apparatus for manufacturing a fitting with a sealing gasket of the type shown in Fig. 9. It is observed that in a similar manner as described hereinbelow and shown in Figs. 10-12, a fitting ring with sealing gasket can be manufactured. The apparatus shown again comprises a mold block 43 and a core 44. The core again comprises swivelable segments 49, in Figs. 10 and 11 located within an outwardly (i.e. rightwards in the Figures) slidable sleeve 48. Around the sleeve 48 there lies a second sleeve 47. With the sleeve 48, the sleeve 47 constitutes the portion of the mold cavity 33' corresponding to the foremost edge part of the widened portion 37 of the fitting. Together with the mold block 43, the sleeve 48 forms the remainder of the mold cavity 33' for the connecting part of the fitting. The sleeve 48 has an external shoulder 70 between a first portion 71 of a relatively large wall thickness and a second portion 72 of a smaller wall thickness. Provided in the shoulder is a circular groove 73 for forming the flange 61 of the fitting.

The apparatus shown functions as follows. In the position shown in Fig. 10, plastic is injected into the cavity 41. After sufficient cooling, the sleeve 48 is subsequently withdrawn over such a distance (for instance the distance A in Fig. 11) that the shoulder comes to lie outside the end edge of the fitting. Next, the sleeve 47 can be slid rightwards, for instance in that it is moved along by the sleeve 48, when the sleeve 48 is pulled further outwards. This involves the nose 74 of the sleeve 47 having to pass the rim 63 of the molded fitting. This is possible as long as the fitting is still sufficiently warm and hence sufficiently flexible for bending inwards when the sleeve 47 is pulled rightwards. The part 37 can bend inwards, because the sleeve 48 has already been slid outwards. Hence, when the sleeve 47 is being pulled outwards (to the right), the part 37 bends inwards elastically so far that the nose 74 of the sleeve 47 can pass the rim. After that, the part 37 resumes its original position.

When the two sleeves have been slid outwards sufficiently far, the segments 49 are swiveled outwards as indicated by 49' in Fig. 12.

Also, a number of sliding segments or slides 56, arranged around the sleeve 47 for sliding diametrically inwards and outwards, move inwards (position 58 in Fig. 12). The slides in fact take the place of the foremost portion of the sleeve 47. The slides have a recess 75 on the side facing the front edge of the fitting. Together with a recess 76 in the mold block 43 which recess corresponds to the nose 74 of the sleeve 47, the recess 75 forms a part of the mold cavity for a sealing gasket, namely a part located in front of and outside the end edge of the fitting and enclosing the rim 63. The remainder 77 of the mold cavity for the sealing gasket is bounded by the swivel segments 49, abutting against the slides 56 and against the flange 61 and/or the inner wall of the fitting 33 in the part located beyond the widened portion 37. This position of the various mold parts is shown in Fig. 12.

In the situation of Fig. 12, a sealing gasket can be formed in the mold cavity 75,76,77 by supplying suitable liquefied material in the usual manner.

It is observed that similar techniques as described hereinabove are applicable to differently formed fittings or fitting rings, or articles that have to be provided with an internal sealing gasket. Also, after the foregoing, various variants and modifications will readily occur to a skilled person. Such variants and modifications are understood to fall within the framework of the invention.

## Claims

1. A method for manufacturing a gasket sealing for a plastic fitting or fitting ring, **characterized in that** the fitting or fitting ring is formed by injection molding in a mold cavity with a mold arranged so that the fitting or fitting ring is provided with an internal chamber, the mold having a core with at least a first position for forming the fitting (ring) proper and a second position for forming a sealing gasket, the fitting (ring) being formed while the core is in its first position and the core being subsequently brought into a second position for forming a gasket mold cavity for a sealing gasket within said chamber, said gasket mold cavity being filled with a suitable material for a sealing gasket, the mold further comprising means for providing the fitting (ring) and the gasket mold cavity with such a shape that the gasket formed in the gasket mold cavity conformably connects to the fitting (ring) and is secured against displacement along the fitting (ring).

2. A method according to claim 1, **characterized in that** the mold comprises a number of needles arranged in radially distributed positions adjacent a circumferential part or end edge of said chamber, said needles, during the molding of the fitting (ring), extending into the mold cavity for forming openings in the fitting (ring) and said needles, prior to the molding of a sealing gasket, being substantially withdrawn from the mold cavity.

3. A method according to claim 2, **characterized in that** needles are used having, at the ends extending into the mold cavity, a front section of a relatively small cross section and a following section of a larger cross section for forming stepped openings.

4. A method according to claim 2 or 3, **characterized in that** the material for the sealing gasket is supplied via at least one supply channel, released by a needle.

5. A method according to claim 4, **characterized in that** the at least one supply channel connects to an opening in the fitting (ring) formed by the relevant needle.

6. A method according to any one of the preceding claims, **characterized in that** a mold is used having inwardly and outwardly swivelable segments located inside a core sleeve, the core sleeve in the first position bounding the mold cavity on the inside at least at the level of the chamber, while in the second position, the core sleeve has at least partially been displaced and the segments have swiveled outwards, so that the segments in that position bound the mold cavity at least partially.

7. A method according to claim 6, **characterized in that** the core sleeve comprises two sleeves that are slidable one in the other, the outer sleeve in the second position extending further into the chamber than the inner sleeve.

8. A method according to claim 1, **characterized in that** the mold comprises a mold cavity for the fitting (ring) such that a fitting (ring) is obtained having, at or adjacent the free end thereof, one or more projections capable of retaining a part of a sealing gasket formed around the free end.

9. A method according to claim 8, **characterized in that** a mold is used having inwardly and outwardly swivelable segments located inside a core sleeve, the core sleeve in the first position bounding the mold cavity at least at the level of the chamber on the inside, while in the second position, the core sleeve has at least partially been displaced and the segments have swiveled outwards, so that in that position, the segments bound the mold cavity for a sealing gasket at least partially.

10. A method according to claim 9, **characterized in that** the core sleeve is enclosed by a second slidable sleeve which lies around the core sleeve and in the first position bounds the mold cavity on the part corresponding to the end edge of the fitting (ring) and which is formed so that a fitting having at least one or more projections on the end edge is obtained, while the second sleeve, after displacement of the core sleeve, can be pulled over the at least one projection for releasing it, whereupon a sealing gasket is formed in the chamber and around the end edge of the molded fitting.

11. An apparatus for manufacturing a gasket sealing for a plastic fitting or fitting ring, **characterized in that** the fitting or fitting ring is formed by injection molding in a mold cavity with a mold arranged so that the fitting or fitting ring is provided with an internal chamber, the mold having a core with at least a first position for forming the fitting (ring) proper and a second position for forming a sealing gasket in a gasket mold cavity located at least partially within said chamber, which gasket mold cavity can be filled with a suitable material for a sealing gasket, the mold further comprising means for providing the fitting (ring) and the gasket mold cavity with such a shape that the sealing gasket conformably connects to the fitting ring and is secured against displacement along the fitting ring.

12. An apparatus according to claim 11, **characterized in that** the mold comprises a number of needles disposed at radially distributed positions adjacent a circumferential part or end edge of said chamber, said needles, during the molding of the fitting (ring), extending into the mold cavity to form openings in the fitting (ring) and said needles, prior to the molding of a sealing gasket, being substantially withdrawn from the mold cavity.

13. An apparatus according to claim 12, **characterized in that** the needles have a front section having a relatively small cross section and, connecting thereto, a section having a larger cross section.

14. An apparatus according to claim 12 or 13, **characterized in that** the needles comprise at least one sprue needle and a number of break-through needles, each needle having a first position in which the front section and a part of the section connecting thereto extends into the mold cavity, and a second position in which only the front section extends into the mold cavity and the front face of the following section acts as closing face, and the at least one sprue needle further having a third position, in which a supply channel for gasket material is released.

15. An apparatus according to claim 14, **characterized in that** the supply channel connects to a bore in which the sprue needle is slidable.

16. An apparatus according to any one of claims 11-15, **characterized in that** the mold comprises inwardly and outwardly swivelable segments located inside a core sleeve, the core sleeve in the first position bounding the mold cavity on the inside at least at the level of the chamber, while in the second position, the core sleeve has at least partially been displaced and the segments have swiveled outwards, so that the segments in that position bound the mold cavity at least partially.

17. An apparatus according to claim 15, **characterized in that** the core sleeve comprises two sleeves slidable one into the other, the outer sleeve in the second position extending further into the chamber than the inner sleeve.

18. An apparatus according to claim 17, **characterized in that** the mold is provided with a mold cavity for the fitting (ring) such that a fitting (ring) is obtained which, at or adjacent the free end thereof, comprises one or more projections capable of retaining a part of a sealing gasket formed around the free end thereof.

19. An apparatus according to claim 18, **characterized in that** a mold is used having inwardly and outwardly swivelable segments located within a core sleeve, the core sleeve in the first position bounding the mold cavity on the inside at least at the level of the chamber, while in the second position, the core sleeve has at least partially been displaced and the segments have swiveled outwards, so that the segments in that position bound the mold cavity for a sealing gasket at least partially.

20. An apparatus according to claim 19, **characterized in that** the core sleeve is enclosed by a second slidable sleeve lying around the core sleeve, which second slidable sleeve in the first position bounds the mold cavity on the part corresponding to the end edge of the fitting (ring) and which is formed so that a fitting (ring) having at least one or more projections on the end edge is obtained, while the second sleeve, after displacement of the core sleeve, can be pulled over the at least one projection for releasing it, whereupon a sealing gasket is formed in the chamber and around the end edge of the molded fitting (ring).

21. An apparatus according to claim 20, **characterized by** a number of radially displaceable sliding elements which, in the first position, are located outside the second slidable sleeve and, after the displacement of the second slidable sleeve, can be slid inwards to abut against the outwardly swiveled segments, to form, together with a part of the segments, a part of the mold cavity for a sealing gasket which part is located around the end edge with the at least one projection of the fitting.

22. An apparatus according to any one of claims 11 and 18-21, **characterized in that** the at least one projection comprises a raised rim formed around the end edge of the fitting (ring).

23. An apparatus according to any one of claims 11-22 arranged for forming a curved fitting and comprising an inner core and a sleeve lying around the inner core and defining the inner surface of the coupling part of the fitting, **characterized in that** the inner core, adjacent the transition between the coupling part and the curved part of the fitting, has a profiled edge whereagainst a correspondingly profiled end edge of the sleeve fits.

24. A fitting or fitting ring, **characterized by** a sealing gasket which is integrally injection-molded by means of a co-injection technique and which is conformably connected to the fitting (ring) and secured against displacement.

25. A fitting or fitting ring according to claim 24, **characterized in that** the projections extend into openings in the fitting ring and have a larger cross section adjacent the outer surface of the fitting (ring) than adjacent the inner surface of the fitting (ring).

26. A fitting (ring) according to claim 25, **characterized by** at least one projection formed at the end edge and a sealing gasket formed around the end edge and the at least one projection.

27. A fitting (ring) according to claim 26, **characterized by** a flange extending from the relatively narrow part of the fitting into the widened chamber.
